## Europäisches Patentamt
(19) **European Patent Office**
**Office européen des brevets**

(11) Publication number: **0 002 311**
**B1**

(12)

# EUROPEAN PATENT SPECIFICATION

(45) Date of publication of patent specification: 12.01.83

(21) Application number: 78300498.9

(22) Date of filing: 13.10.78

(51) Int. Cl.³: **B 29 C 1/14, B 29 D 27/00, C 08 J 9/00, C 08 L 23/04**

(54) Making undercut mouldings.

(30) Priority: 24.10.77 GB 4415277

(43) Date of publication of application:
13.06.79 Bulletin 79/12

(45) Publication of the grant of the patent:
12.01.83 Bulletin 83/2

(84) Designated Contracting States:
BE CH DE FR GB LU NL SE

(56) References cited:
DE - A - 1 544 969
DE - A - 1 919 748
DE - A - 2 425 569
DE - A - 2 611 527
DE - A - 2 622 903
DE - C - 834 140
FR - E - 63 880
GB - A - 1 355 383
US - A - 3 470 119
US - A - 4 021 380

(73) Proprietor: IMPERIAL CHEMICAL INDUSTRIES PLC
Imperial Chemical House Millbank
London SW1P 3JF (GB)

(72) Inventor: Gilby, Gordon William
2 The Ryde
Hatfield Herts (GB)

(74) Representative: Leng, Francis Edward
Imperial Chemical Industries Limited Legal
Department: Patents Thames House North
Millbank
London SW1P 4QG (GB)

(56) References cited:
KUNSTSTOFFE, Vol. 47, August 1957,
Leverkusen, H. A. SCHEURLEN "Methoden zur
Herstellung von Schaumstoffen unter
besonderer Berücksichtigung von Treibmitteln"

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

# Making undercut mouldings

This invention relates to a method for making undercut mouldings.

An undercut mould surface impedes and often prevents removal of a moulding from the mould. In some cases the difficulty can be overcome by using complex contractable mould components but these are expensive and complicate the moulding cycle. It has now been discovered that certain compositions comprising polymers of ethylene can be moulded in such a way as to cause the moulded composition to free itself from an undercutting surface of the mould.

DE—A—2 611 527 describes a method of moulding articles from polyolefine compositions which contain cross-linking agents and foaming agents. A mould with movable segments is used and the segments move in order to free the moulding.

According to this invention undercut mouldings are made by:—

(a) injecting a composition comprising a molten polymer of ethylene, a cross-linking agent and a chemical foaming agent into a closed mould,

(b) subjecting the composition within the closed mould to a temperature sufficient to activate the cross-linking agent and sufficient to decompose the foaming agent, characterised in that the mould resists expansion of the composition and has an undercutting surface and that when the mould opens the expansion of its contents facilitates their release from the undercutting surface.

When it frees itself, the moulding may move away from the undercutting surface sufficiently far to clear the surface or merely sufficiently to allow the moulding to be removed from the surface with the aid of a resilient deformation of the moulding. The extent to which the moulding moves away from the undercutting surface is governed by the concentrations of crosslinking and forming agents employed in the composition, by the temperatures used during moulding and by the time taken to perform the moulding cycle which in turn is governed by the thickness of the moulding. The moulding cycle usually takes from 10 to 360 seconds.

The composition preferably contains from 0.2 to 6 (especially from 1 to 4) % by weight of crosslinking agent and from 0.2 to 6 (especially 1 to 4) % by weight of a chemical foaming agent. Typical crosslinking agents used with polyolefins include dicumyl peroxide, 1,3-bis(tertiary butylperoxyisopropyl)benzene and 2,5-di-methyl-2,5-di(tertiary butylperoxy)-hexyne-3. Typical chemical foaming agents used in polyolefins include azodicarbonamide, p,p'-oxybis(benzene sulphonyl hydrazine) and others as described in "Kunststoffe" volume 47, No. 8 (1957) pages 446 to 455. The crosslinking agents may be used with the co-agents such as triallyl cyanurate or activators such as m-phenylenedimaleimide. The foaming agents may be used together with the usual aids such as oxides, hydroxides or soaps (especially stearates) of alkaline or alkaline earth metals (especially magnesium) or zinc.

Prior to the opening of the closed components of the mould, the composition in the mould is preferably heated to a temperature of from 150 to 210°C (especially 170 to 190°C). Generally the composition is injected into the mould under a pressure of from 1.7 to 70 (especially 6.5 to 35) MN/m$^2$.

The polymer may be a homopolymer of ethylene preferably made by a free radical initiated polymerisation or it may be a copolymer. The preferred polymer is a copolymer of ethylene with up to 25% (preferably 5 to 20%) by weight of an unsaturated ester of a carboxylic acid, especially vinyl acetate or a methyl, ether or butyl ester of acrylic or methacrylic acids. Preferably the polymers have a melt flow index of from 0.5 to 50 (especially 1 to 10) g/10 minutes as measured according to British Standard 2782, part 1/105C/1976 using a 2.16 Kg load and carried out at 190°C.

The composition may also contain the usual fillers such as chalk, dolomite, barytes, talc, clay, wood flour and slate flour, and the usual stabilisers such as antioxidants or light stabilisers, processing aids such as stearic acid, pigments and plasticisers such as dioctyl phthalate.

## Example

A composition of the following formulation was made up:

95% by weight of a copolymer of ethylene with 18% by weight (based on the copolymer) of vinyl acetate and having a melt flow index of 2 g/10 minutes,

1.8% by weight of a crosslinking agent which was dicumyl peroxide,

1.7% by weight of a chemical foaming agent which was azodicarbonamide.

0.75% by weight of zinc oxide to promote a mcre uniform decomposition of the foaming agent, and

0.75% by weight of stearic acid as a processing aid.

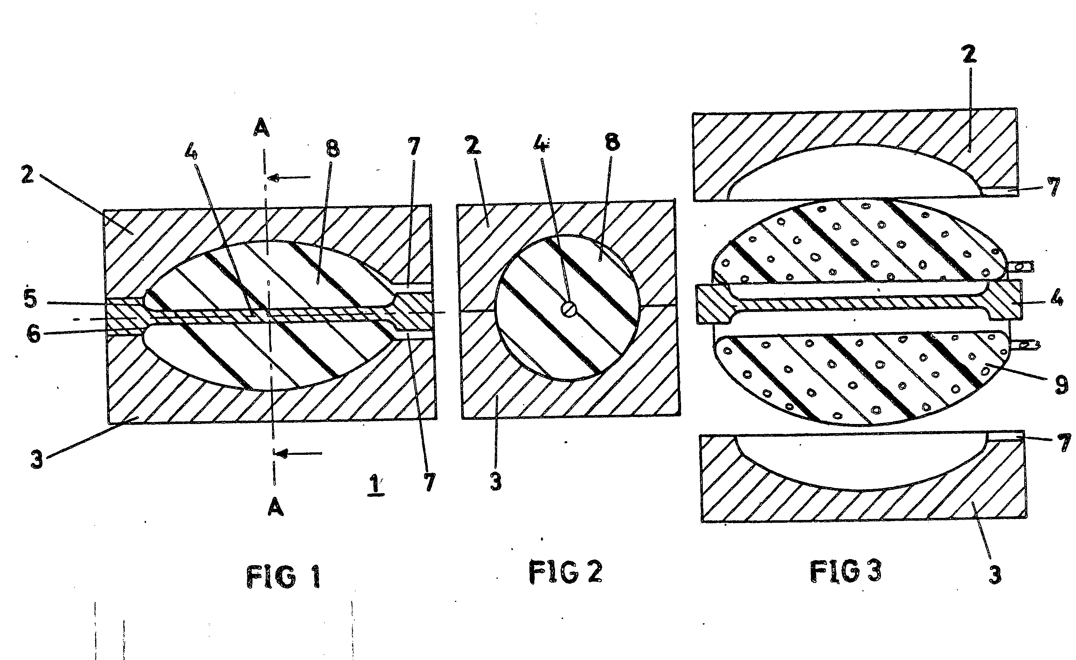

The composition was heated to 115°C and injected into the mould having closed components which is hereinafter described with reference to Figures 1, 2 and 3 of the drawings. The mould was hot and was allowed to heat the composition to about 180°C in order to activate the crosslinking agent and to decompose the chemical foaming agent so as to liberate its nitrogen. The closed components of the mould resisted expansion of the liberated nitrogen. After the composition has reached about 180°C, the components of the mould were opened enabling the liberated nitrogen to expand and cause the composition to expand with it. It was discovered that the expanding composition moved away from and cleared the undercutting surface of the mould so permitting easy removal of the foamed crosslinked moulding from the mould.

Examples of moulds suitable for use in the performance of this invention will now be described with reference to the drawings in which

Figure 1 shows in section a mould used in making fishing floats.

Figure 2 shows a section on the line A—A of Figure 1.

Figure 3 shows in section the mould of Figure 1 after the mould components have been opened.

Figure 4 shows in section a mould used in making shoe heels.

Figure 5 shows in section the mould of Figure 1 after the mould components have been opened.

Figure 6 shows in section a mould used in making a bellows.

Figure 7 shows in section the central component of the mould of Figure 6 after the other mould components have been opened and removed.

Figure 1 shows a mould 1 composed of closed mould components 2 and 3 and central mould component 4 having undercutting surfaces 5 and 6. An annular inlet 7 in closed components 2 and 3 allows a molten crosslinkable foamable polymer composition 8 to be injected into mould 1. It will be understood that if composition 8 were to solidify, undercutting surfaces 5 and 6 would prevent its removal undamaged from the central component 4 of mould 1.

On heating composition 8 and opening mould components 2 and 3 to positions shown in Figure 3 composition 8 expands and crosslinks to form solid moulding 9 shown in Figure 3. During expansion, composition 8 moves away from central component 4 so that it frees itself from and clears undercutting surfaces 5 and 6 with the result that moulding 9 can be easily removed from central component 4 of mould 1.

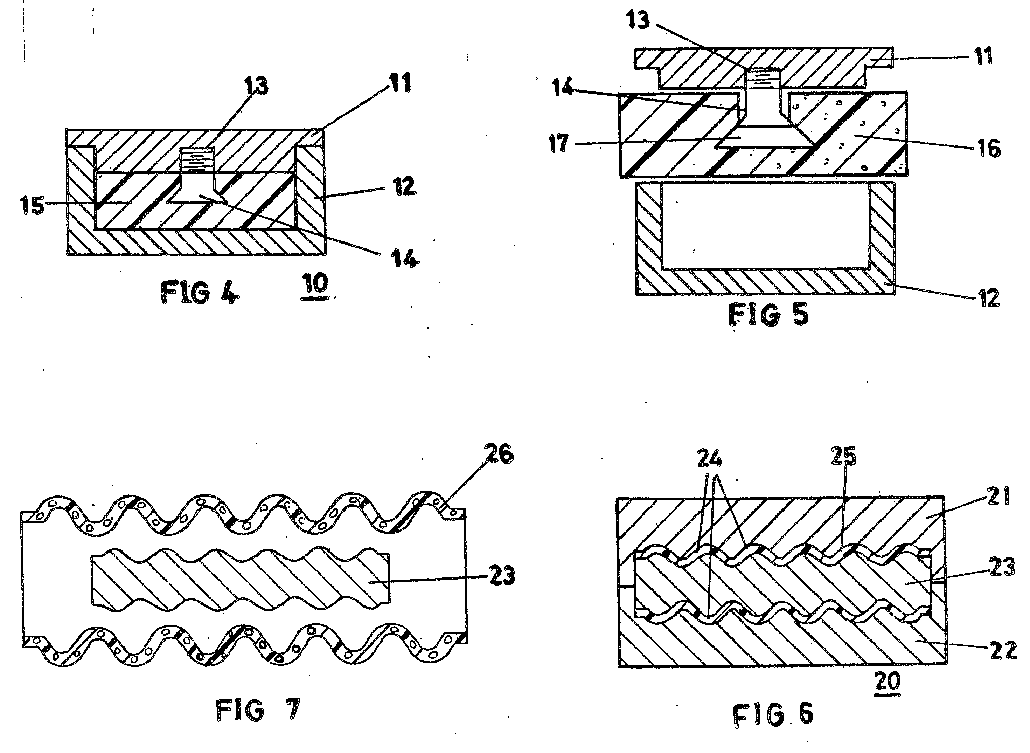

Figure 4 shows a mould 10 for use in moulding shoe heels. Mould 10 is composed of closed mould components 11 and 12 and a threaded stud 13 having an expanded head 14. Stud 13 is screwed into component 11 and serves to define a recess 17 (see Figure 5) in the moulded heel so that when subsequently the heel is glued onto a shoe the glue can key into the recess 17.

A molten crosslinkable foamable polymer composition 15 is injected into mould 10 via an unshown inlet. It will be understood that if composition 15 were to solidify, undercutting head 14 would prevent its removal undamaged from mould 10.

On heating composition 15 and opening mould components 11 and 12 to positions shown in Figure 5, composition 15 expands and crosslinks to form solid moulded shoe heel 16. During expansion, composition 15 moves away from stud 13 so that it frees itself from undercutting head 14 leaving head 14 making a loose engagement with recess 17 in moulded heel 16. Pulling downwards on heel 16 causes a resilient deformation which permits heel 16 to be pulled off stud 13 undamaged.

Figure 6 shows a mould 20 composed of closed mould components 21 and 22 and a central mould component 23 having undercutting peaks 24. A crosslinking foamable composition 25 is injected into mould 20 via an unshown inlet. On heating composition 25 and opening mould components 21 and 22, composition 25 expands and crosslinks to form solid bellows 26 which is well clear of central undercutting mould component 23.

**Claim**

A method for making undercut mouldings which comprises

(a) injecting a composition comprising a molten polymer of ethylene, a cross-linking agent and a chemical foaming agent into a closed mould,

(b) subjecting the composition within the closed mould to a temperature sufficient to activate the cross-linking agent and sufficient to decompose the foaming agent, characterised in that the mould resists expansion of the composition and has an undercutting surface and that when the mould opens the expansion of its contents facilitates their release from the undercutting surface.

**Revendication**

Procédé pour la production de moulages en contre-dépouille consistant:—

a) à injecter une composition renferment un polymère en fusion d'éthylène, un agent de réticulation et un agent moussant chimique dans un moule fermé,

b) à soumettre la composition, à l'intérieur du moule fermé, à l'effet d'une température suffisante pour activer l'agent de réticulation et suffisante pour décomposer l'agent moussant, caractérisé en ce que le moule résiste à l'expansion de la composition et présente une surface en contre-dépouille et en ce que, lorsque le moule s'ouvre, l'expansion de son contenu facilite son dégagement par rapport à la surface en contre-dépouille.

**Patentanspruch**

Verfahren zur Herstellung von unterschnittenen Formkörpern bzw. Formlingen, bei dem

(a) eine Masse, die ein geschmolzenes Polymeres von Äthylen, ein Vernetzungsmittel und ein chemisches Schaumerzeugungs- bzw. Treibmittel enthält, in eine geschlossene form gespritzt und

(b) die Masse innerhalb der geschlossenen Form einer zum Aktivieren des Vernetzungsmittels und zum Zersetzen des Schaumerzeugungs- bzw. Treibmittels ausreichenden Temperatur ausgesetzt wird, dadurch gekennzeichnet, daß die Form einer Ausdehnung der Masse widersteht une eine unterschneidende Oberfläche aufweist und daß die Ausdehnung des Forminhalts beim Öffnen der Form die Befreiung bzw. Ablösung der Forminhalts von der unterschneidenden Oberfläche erleichtert.

FIG 1

FIG 2

FIG 3

0 002 311

FIG 4

FIG 5

FIG 6

FIG 7

2